Europäisches Patentamt

European Patent Office

Office européen des brevets

(11) Veröffentlichungsnummer: **0 274 791 B1**

(12) **EUROPÄISCHE PATENTSCHRIFT**

(45) Veröffentlichungstag der Patentschrift: 28.08.91

(51) Int. Cl.5: **G01M 11/00, G02B 26/02**

(21) Anmeldenummer: 87202506.9

(22) Anmeldetag: 14.12.87

(54) **Verfahren zur Messung der spezifischen krümmungsabhängigen Dämpfungserhöhung eines LWL.**

(30) Priorität: 19.12.86 DE 3643525

(43) Veröffentlichungstag der Anmeldung:
20.07.88 Patentblatt 88/29

(45) Bekanntmachung des Hinweises auf die
Patenterteilung:
28.08.91 Patentblatt 91/35

(84) Benannte Vertragsstaaten:
**DE FR GB IT**

(56) Entgegenhaltungen:
EP-A- 0 185 949
DE-A- 2 911 410
DE-A- 3 332 631
GB-A- 2 166 257

APPLIED OPTICS, Band 29, Nr. 15, August
1985, Seiten 2323-2334, New York, US; S. DAS
et al.: "Power loss, modal noise and distortion due to microbending of optical fibers"

LASER FOCUS, Band 18, Nr. 7, Juli 1982,
Seiten 99-106, Newton, Massachusetts, US;
J.D. CHIPMAN "Measurement standards for
optical fiber in field installations"

(73) Patentinhaber: **Philips Patentverwaltung
GmbH
Wendenstrasse 35 Postfach 10 51 49
W-2000 Hamburg 1(DE)**

(84) Benannte Vertragsstaaten:
**DE**

Patentinhaber: **N.V. Philips' Gloeilampenfabrieken
Groenewoudseweg 1
NL-5621 BA Eindhoven(NL)**

(84) Benannte Vertragsstaaten:
**FR GB IT**

(72) Erfinder: **Bachmann, Peter Klaus, Dr. Ing.
Karlstrasse 55
W-5100 Aachen(DE)**
Erfinder: **Leers, Dieter, Dipl. Ing.
Wolferskaul 21
W-5100 Aachen(DE)**
Erfinder: **Wiechert, Detlef Uwe, Dipl. Phys.
Pützdrischstrasse 101
W-5110 Alsdorf-Hoengen(DE)**

Erfinder: **Zimmermann, Klaus Dieter**
**Aan de Not 85**
**Vaals(NL)**

(74) Vertreter: **Koch, Ingo, Dr.-Ing. et al**
**Philips Patentverwaltung GmbH Wenden-**
**strasse 35 Postfach 10 51 49**
**W-2000 Hamburg 1(DE)**

**Beschreibung**

Die Erfindung bezieht sich auf ein Verfahren zur Messung der sich bei Krümmung mit einem vorgegebenen Krümmungsradius ergebenden Zusatzdämpfung (D) pro Längeneinheit eines Lichtwellenleiters (LWL).

Verfahren zur Messung der Dämpfung von LWL sind beispielsweise durch "Principles of optical fiber measurements", Academic Press, NY, ISBN 0-12-470980-X, 1981, Seite 226-236, bekannt.

Die sich bei Krümmung mit einem vorgegebenen Krümmungsradius ergebende Zusatzdämpfung eines LWL ist ein Kennwert, welcher wertvolle Schlüsse insbesondere über das spätere Verhalten des LWL nach dessen Einbringen in ein optisches Kabel ermöglicht. Man möchte deshalb bereits vor der Weiterverarbeitung eines LWL wissen, in welchem Ausmaß die Dämpfung dieses LWL-Typs bei unterschiedlichen Krümmungsradien zunimmt.

Das Verhalten eines LWL bei Krümmung hängt insbesondere vom Herstellungsverfahren, vom Brechungsindexprofil und von der Beschichtung ab. Unmittelbar im Anschluß an die Faserherstellung gewonnene Erkenntnisse über das Krümmungsverhalten können dazu benutzt werden, um Verfahrensparameter zu korrigieren, so daß das Ausmaß der bei Krümmungen entstehenden Zusatzdämpfungen bis auf ein Minimum verringert wird. Andererseits bietet die Kenntnis über das krümmungsspezifische Verhalten eines vorliegenden LWL-Vorrats auch dem Kabelkonstrukteur die Möglichkeit, die Kabelkonstruktion an die Kenndaten des betreffenden LWL-Vorrats anzupassen. Er kann zwar, da eine Überlänge des LWL im Kabel vorgesehen werden muß, auf eine gekrümmte, z.B. wellenförmige Führung des LWL im Kabel nicht verzichten.

Er kann jedoch, wenn er vorher weiß, daß der zu verwendende LWL beim Unterschreiten eines kritischen Krümmungsradius mit überproportionaler Dämpfungszunahme reagiert, eine solche Kabelkonstruktion anstreben, bei welcher das Entstehen von derartigen Krümmungsradien, die in der Nähe des kritischen Werts liegen, ausgeschlossen ist.

Die Messung der durch Biegungen mit einem Radius von ca. 5 bis 8 cm, wie sie beim Verkabeln durchaus möglich sind, verursachten Zusatzdämpfungen bereitet Schwierigkeiten, da bei guten LWL pro Einzelbiegung weniger als 0,00005 dB Dämpfungserhöhung auftreten. Meßaufbauten zur Bestimmung derart geringer Dämpfungen stehen nicht zur Verfügung.

Eine Alternative zur Messung der genannten geringen Verluste besteht in der Messung der entsprechend höheren Verluste in stärker gekrümmten Fasern bei Biegeradien von 0,5 bis 2 cm. Durch Extrapolation könnte man auf das Verhalten bei größeren Biegeradien, wie sie in Kabeln auftreten, schließen. Hierbei handelt es sich um eine indirekte Meßmethode, die vorraussetzt, daß der Zusammenhang zwischen biegungsverursachten Zusatzdämpfungen, Brechzahlprofil und Biegeradius genau bekannt ist. Diese Voraussetzung ist jedoch keineswegs erfüllt. Eine weitere Möglichkeit, die in der Praxis auftretenden Biegeverluste zu messen, besteht darin, ein nur für Versuchszwecke dienendes Testkabel herzustellen. Dieses Verfahren ist sehr aufwendig und setzt außerdem voraus, daß die Eigenschaften der LWL im jungfräulichen Zustand bekannt sind.

Durch die DE-A 29 11 410 ist es bekannt, im Rahmen einer Dämpfungsmessung einen LWL von einer Vorratstrommel abund auf eine Aufwickeltrommel aufzuwickeln, wobei der Sender ortsfest mit der Vorratstrommel und der Lichtempfänger ortsfest mit der Aufwickeltrommel verbunden ist.

Durch die EP-A 0 185 949 ist ein Verfahren bekannt, bei welchem als Zwischenschritt zur Bestimmung der cut-off-Wellenlänge eines Einmoden-LWL die durch eine Krümmung hervorgerufene Dämpfungserhöhung gemessen wird. In dieser Druckschrift werden Krümmungen der LWL mit Radien von mehr als 14 cm mit dem Zustand "nicht gekrümmt" assoziiert.

Der Erfindung liegt die Aufgabe zugrunde, ein Verfahren und eine Vorrichtung der eingangs genannten Art zu schaffen, welches auf einfache Weise eine genaue Bestimmung der durch Krümmungen in Lichtwellenleitern verursachten Zusatzdämpfungen bei vorgebbaren Krümmungsradien ermöglicht.

Die Lösung gelingt dadurch, daß in das eine Ende des LWL Licht mittels eines zu diesem Ende fixierten und stabilisierten Senders eingekoppelt wird, daß das andere Ende des LWL relativ zu einem Lichtempfänger fixiert wird, welcher ortsfest mit einer der Zusatzdämpfung bewirkenden und die Krümmungsradien vorgebenden Aufwickeltrommel verbunden ist, und daß Dämpfungsmessungen bei einer geringen Zahl von auf die Aufwickeltrommel gewickelten Windungen des LWL und mindestens bei einer wesentlich höheren Anzahl von Windungen durchgeführt werden.

Mit der Messung der geringen Windungszahl, welche eine Windungszahl "Null" einschließen kann, ist die Dämpfung der Faser im ungekrümmten Zustand ermittelbar. Mit der zweiten Messung ermittelt man die durch Krümmung entstehende Dämpfungserhöhung, wobei eine Vielzahl von Windungen genügend hohe Meßwertunterschiede ermöglicht, die mittels üblicher Dämpfungsmeßeinrichtungen ermittelt werden können.

Selbstverständlich kann man zur Ermittlung des Einflusses verschieden starker Krümmungen Aufwickeltrommeln mit unterschiedlichem Radius verwenden.

Bei dem erfindungsgemäßen Verfahren ist es wichtig, daß sowohl die Einkopplung des gesendeten Lichts als auch die Auskopplung des Lichts aus dem anderen Ende des LWL in den optischen Empfänger stets gleichbleibend und unverändert ist. Nur dann können die bei verschiedenen aufgewickelten Windungszahlen ermittelten Meßwerte zueinander in Beziehung gesetzt werden. Aus diesem Grunde müssen bei allen aufeinanderfolgenden Messungen der optische Sender und der optische Empfänger raumfest den jeweiligen Enden des LWL zugeordnet werden. Jede Neueinstellung der optischen Ankopplung würde unkalkulierbare Änderungen des Einkopplungswirkungsgrades bedeuten.

Selbstverständlich ist darauf zu achten, daß bei dem Aufwickelvorgang auf die Aufwickeltrommel zumindest während der Messungen keine nennenswerten mechanischen Zugspannungen im LWL verursacht werden, da auch diese zu unerwünschten Zusatzdämpfungen und damit zur Verfälschung des Meßergebnisses führen würden.

Damit möglichst genau die Dämpfung des ungekrümmten LWL erfaßbar ist, ist es vorteilhaft, daß die zum Aufwickeln auf die Aufwickeltrommel bestimmte Länge des LWL von einem Vorratsbehälter abgenommen wird, in welchem der LWL derart geführt wird, daß Krümmungen von weniger als 10 cm, vorzugsweise weniger als 30 cm vermieden werden.

Da in der Praxis Längen von 100 bis mehr als 1000 m in dem vorratsbehälter untergebracht werden müssen, wird dieser vorteilhaft als Vorratstrommel ausgebildet, auf welche der LWL aufgewickelt ist.

Gemäß einer ersten Ausführungsart ist vorgesehen, daß die zum Aufwickeln bestimmte Länge des LWL von einer drehbaren Vorratstrommel abgewickelt wird, mit welcher der Sender ortsfest verbunden ist. Da jedoch für die Messung ein stabilisierter Lichtsender erforderlich ist, welcher aufwendig ist und viel Platz beansprucht, wird eine Lösung bevorzugt, welche dadurch gekennzeichnet ist, daß der LWL von einer stillstehenden Vorratstrommel abgewickelt wird, und daß die Aufwickeltrommel bei ihrer Aufwickeldrehung um die Vorratstrommel herum geführt wird. Dann kann der stabilisierte Lichtsender, welcher nicht gedreht werden muß, an beliebiger geeigneter Stelle vorzugsweise unter- oder oberhalb der Vorratstrommel angeordnet sein. Meßergebnisse für verschieden starke Krümmungen werden dadurch einfach möglich, daß der LWL auf axial aufeinanderfolgende Bereiche der Aufwickeltrommel aufgewickelt wird, deren Durchmesser unterschiedlich sind.

Eine besonders vorteilhafte Vorrichtung zur Ausübung des erfindungsgemäßen Verfahrens ist dadurch gekennzeichnet, daß vorgesehen sind

- eine Vorratstrommel, von der der LWL abwickelbar ist;
- eine die Zusatzdämpfung bewirkende und die Krümmungsradien vorgebene Aufwickeltrommel, auf die der LWL aufwickelbar ist;
- ein zu einem Ende des LWL fixierter, stabilisierter Sender zur Einkopplung von Licht in den LWL;
- und ein relativ zu dem anderen Ende des LWL fixierter Lichtempfänger, welcher ortsfest mit der Aufwickeltrommel verbunden ist;

und daß die Aufwickeltrommel um eine zur Mittelachse der Vorratstrommel parallele Drehachse drehbar ist, wobei die Drehachse der Aufwickeltrommel an einer um die Mittelachse der Vorratstrommel drehbaren Umlaufhalterung angeordnet ist.

Gemäß einer Weiterbildung dieser Vorrichtung ist vorgesehen, daß der Lichtempfänger und gegebenenfalls ein elektrischer Vorverstärker an der Aufwickeltrommel befestigt sind, während die für die Signalverarbeitung erforderlichen weiteren Baugruppen ortsfest außerhalb der Aufwickeltrommel angeordnet und mit dem Lichtempfänger bzw. dem Vorverstärker lösbar verbindbar sind. Die Erfindung wird anhand der Beschreibung eines in der Zeichnung dargestellten besonders vorteilhaften Ausführungsbeispiels näher erläutert.

Fig. 1   zeigt perspektivisch die schematische Anordnung einer für die Ausübung des erfindungsgemäßen Verfahrens geeigneten Vorrichtung

Fig. 2   zeigt die mittels einer Vorrichtung nach Fig.1 gemessene Intensitätsreduktion bei verschiedenen Wellenlängen des Sendelichts als Funktion der Anzahl der Windungen

Fig. 3   zeigt gemessene Dämpfungswerte bei verschiedenen Krümmungsradien.

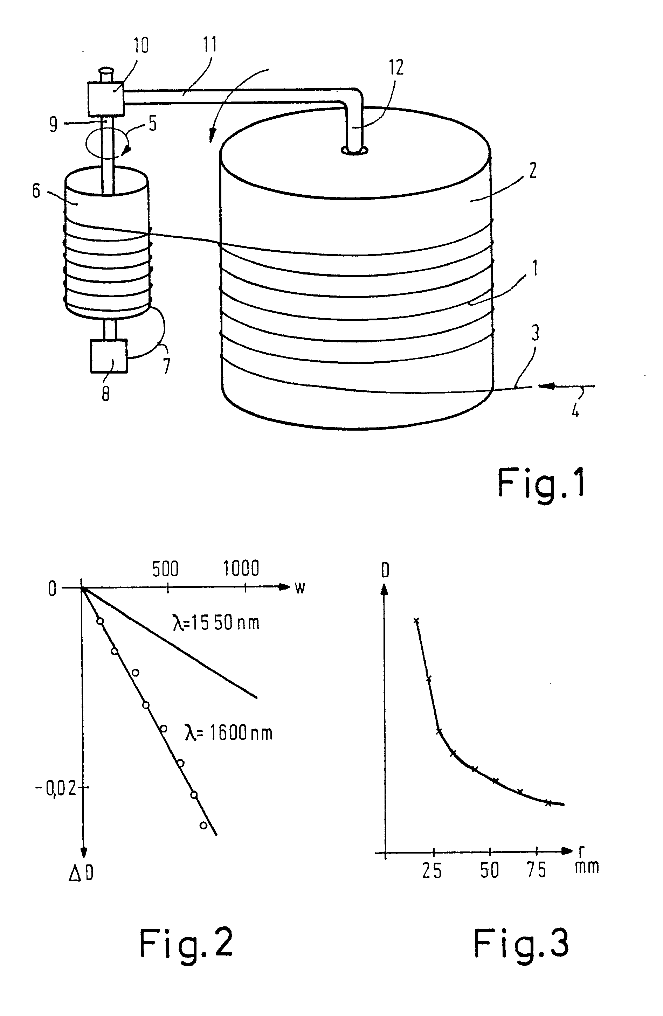

In Figur 1 ist eine Vorratslänge eines LWL 1 auf eine feststehende Trommel 2 aufgewickelt. In das Ende 3 des LWL 1 wird in Pfeilrichtung 4 mittels eines zum Ende 3 fixierten optischen Senders Meßlicht eingekoppelt. Auf die in Pfeilrichtung 5 drehbare Aufwickeltrommel 6 ist für Meßzwecke eine Mehrzahl von Windungen des LWL aufgewickelt. Das Ende 7 des LWL 1 ist relativ zum optischen Detektor 8, welcher fest mit der Trommel 6 verbunden ist, fixiert.

Durch Drehen der Aufwickeltrommel 6 in Pfeilrichtung 5 kann eine beliebige gewünschte Anzahl von Windungen aufgewickelt werden. Dabei wird gleichzeitig die Aufwickeltrommel 6 um die Vorratstrommel 2 herumgeführt, so daß die für das Aufwickeln auf die Aufwickeltrommel 6 benötigte Länge des LWL 1 von der Vorratstrommel 2 abgewickelt wird. Zu diesem Zweck ist die Drehachse 9 der Aufwickeltrommel 6 im Lagerblock 10 leichtgängig gelagert. Der Lagerblock 10 ist am Ende des Winkelarms 11 angeordnet,welcher seinerseits mittels seiner abgewinkelten Drehachse 12 in der Wickelachse der Vorratstrommel 2 drehbar gelagert ist. Somit kann die Aufwickeltrommel 6 planetenartig um die Vorratstrommel 2 bewegt werden.

Um trotz geringer Zugkräfte ein Verrutschen der Windungen des LWL sowohl auf der Vorratstrommel 2 als auch auf der Aufwickeltrommel 6 zu verhindern, können die Aufwickelflächen mit einer schwach klebrigen Haftfolie bedeckt sein.

Mit dem optischen Detektor 8 kann ein Vorverstärker integriert sein. Zweckmäßig sind jedoch weitere für die Signalverarbeitung erforderliche Bauteile nicht an der Aufwickeltrommel 6 befestigt. Die erforderlichen elektrischen Verbindungen können nach jeweiliger Beendigung eines Aufwickelvorgangs durch Stecker hergestellt werden.

Mit der in Figur 1 dargestellten Anordnung werden bei verschiedenen Anzahlen von auf die Aufwickeltrommel 6 gewickelten Windungen und bei verschiedenen Durchmessern der Aufwickeltrommel 6 jeweils Lichtintensitäten über den optischen Empfänger 8 gemessen. Der Intensitätsquotient I/Io bei Zunahme der Anzahl der Windungen ist ein Maß für die Dämpfungserhöhung. Dabei ist I die bei höherer Windungszahl gemessene Intensität und Io im allgemeinen die Intensität bei ungebogener Faser. Im Ausführungsbeispiel nach Figur 1 ist der Durchmesser der Vorratstrommel 2 etwa 50 cm. Bei den dabei entsprechenden Krümmungen entstehen praktisch noch keine Zusatzdämpfungen.

Wie aus Figur 2 ersichtlich ist, ist die gemessene Intensitätsreduktion $\Delta D$ (log I/Io) linear von der Anzahl der Windungen w abhängig. Weiterhin erkennt man aus Figur 2, daß der Einfluß der Krümmungen bei Licht verschiedener Wellenlänge unterschiedlich ist.

Da jede Einzelmessung fehlerbehaftet ist, empfiehlt es sich, eine Mehrzahl von Messungen bei verschiedenen Windungszahlen durchzuführen. Die Steigung der Verbindungsgeraden (vergl. die Kennlinie für $\lambda$ = 1600 nm in Figur 2) ist dann ein recht genaues Maß für die durch Krümmungen entstehenden Zusatzdämpfungen.

In Figur 3 ist das Ausmaß der Zusatzdämpfung D pro Längeneinheit in Abhängigkeit des Durchmessers r der Aufwickeltrommel 6 dargestellt. Man erkennt, daß sich kein linearer Zusammenhang ergibt. Aus Meßwerten, die für kleine Krümmungsradien ermittelt wurden, kann man also nicht hinreichend genau durch Extrapolation auf das Verhalten bei größeren Krümmungsradien schließen.

Mittels des erfindungsgemäßen Verfahrens sind Meßgenauigkeiten von 0,00002 dB/Windung erreichbar.

**Patentansprüche**

1. Verfahren zur Messung der sich bei Krümmung mit einem vorgegebenen Krümmungsradius ergebenden Zusatzdämpfung (D) pro Längeneinheit eines Lichtwellenleiters, LWL, dadurch gekennzeichnet, daß in das eine Ende (3) des LWL (1) Licht mittels eines zu diesem Ende (3) fixierten und stabilisierten Senders eingekoppelt wird, daß das andere Ende (7) des LWL (1) relativ zu einem Lichtempfänger (8) fixiert wird, welcher ortsfest mit einer die Zusatzdämpfung bewirkenden und die Krümmungsradien vorgebenden Aufwickeltrommel (6) verbunden ist, und daß Dämpfungsmessungen bei einer geringen Zahl von auf die Aufwickeltrommel (6) gewickelten Windungen des LWL (1) und mindestens bei einer wesentlich höheren Anzahl von Windungen durchgeführt werden.

2. Verfahren nach Anspruch 1, dadurch gekennzeichnet, daß die zum Aufwickeln auf die Aufwickeltrommel (6) bestimmte Länge des LWL (1) von einem Vorratsbehälter abgenommen wird, in welchem der LWL (1) derart geführt wird, daß Krümmungen von weniger als 10 cm, vorzugsweise weniger als 30 cm vermieden werden.

3. Verfahren nach Anspruch 2, dadurch gekennzeichnet, daß die zum Aufwickeln bestimmte Länge des LWL (1) von einer Vorratstrommel (2) abgewickelt wird.

4. Verfahren nach Anspruch 3, dadurch gekennzeichnet, daß die zum Aufwickeln bestimmte Länge des LWL 1 von einer drehbaren Vorratstrommel abgewickelt wird, mit welcher der Sender ortsfest verbunden ist.

5. Verfahren nach Anspruch 3, dadurch gekennzeichnet, daß der LWL (1) von einer stillstehenden Vorratstrommel (2) abgewickelt wird, und daß die Aufwickeltrommel (6) bei ihrer Aufwickeldrehung um die Vorratstrommel (2) herum geführt wird.

6. Verfahren nach einem der Ansprüche 1 bis 5, dadurch gekennzeichnet, daß der LWL (1) auf axial aufeinanderfolgende Bereiche der Aufwickeltrommel (6) aufgewickelt wird, deren Durchmesser unterschiedlich sind.

7. Vorrichtung zur Messung der sich bei Krümmung mit einem vorgegebenen Krümmungsradius ergebenden Zusatzdämpfung (D) pro Längeneinheit eines Lichtwellenleiters (LWL) gemäß dem Verfahren nach einem der Ansprüche 3 bis 5,
dadurch gekennzeichnet, daß vorgesehen sind

- eine Vorratstrommel (2), von der der LWL abwickelbar ist;
- eine die Zusatzdämpfung bewirkende und die Krümmungsradien vorgebene Aufwickeltrommel (6), auf die der LWL aufwickelbar ist;
- ein zu einem Ende (3) des LWL (1) fixierter, stabilisierter Sender zur Einkopplung von Licht in den LWL;
- und ein relativ zu dem anderen Ende (7) des LWL (1) fixierter Lichtempfänger (8), welcher ortsfest mit der Aufwickeltrommel (6) verbunden ist;

und daß die Aufwickeltrommel (6) um eine zur Mittelachse der Vorratstrommel (2) parallele Drehachse (9) drehbar ist, wobei die Drehachse (9) der Aufwickeltrommel (6) an einer um die Mittelachse der Vorratstrommel (12) drehbaren Umlaufhalterung (11) angeordnet ist.

8. Vorrichtung nach Anspruch 7,
dadurch gekennzeichnet, daß der Lichtempfänger (8) und gegebenenfalls ein elektrischer Vorverstärker an der Aufwickeltrommel (6) befestigt sind, während die für die Signalverarbeitung erforderlichen weiteren Baugruppen ortsfest außerhalb der Aufwickeltrommel (6) angeordnet und mit dem Lichtempfänger (8) bzw. dem Vorverstärker lösbar verbindbar sind.

**Claims**

1. A method of measuring the additional attenuation (D) per unit of length of an optical fibre (LWL) when said fibre is bent at a predetermined radius of curvature, characterized in that light is coupled into one end (3) of the optical fibre (1) by means of a stabilized transmitter which is fixed relative to said end (3) and in that the other end (7) of the optical fibre (1) is fixed relative to an optical receiver (8) which is fixedly connected to a take-up reel (6) which causes the additional attenuation and which determines the radii of curvature, and in that attenuation measurements are carried out when a small number of optical fibre turns (1) is wound on the take-up reel (6) and when an at least substantially larger number of turns is wound on said reel.

2. A method as claimed in Claim 1, characterized in that the length of the optical fibre (1) to be wound on the take-up reel (6) is advantageously taken from a supply means in which the optical fibre (1) is accommodated so that curvatures smaller than 10 cm, preferably smaller than 30 cm, are avoided.

3. A method as claimed in Claim 2, characterized in that the length of optical fibre (1) to be wound up is wound off a supply reel (2).

4. A method as claimed in Claim 3, characterized in that the length of optical fibre 1 to be wound up is reeled off a rotatable supply reel to which the transmitter is fixedly connected.

5. A method as claimed in Claim 3, characterized in that the optical fibre (1) is wound off a stationary supply reel (2) and in that, during winding up, the take-up reel (6) is led around the supply reel (2).

6. A method as claimed in one of the Claims 1 to 5, characterized in that the optical fibre (1) is wound on axially successive areas of the take-up reel (6), which areas have different diameters.

7. A device for measuring the additional attenuation (D) per unit of length of an optical fibre (LWL) in accordance with the method as claimed in one of the Claims 3 to 5, when said fibre is bent at a predetermined radius of curvature, characterized in that it comprises

- a supply reel (2) from which the optical fibre can be wound off;
- a take-up reel on which the optical fibre can be wound, said reel bringing about the additional attenuation and predetermining the radii of curvature.
- a stabilized transmitter for coupling light into the optical fibre, which transmitter is fixed relative to one end (3) of the optical fibre (1);
- and an optical receiver (8) which is fixed relative to the other end (7) of the optical fibre (1), said optical receiver being fixedly connected to the take-up reel (6);
- and it is further characterized in that the take-up reel (6) can be rotated about a rotary shaft (9) which extends parallel to the central axis of the supply reel (2), the rotary shaft (9) of the take-up reel (6) being arranged at a rotary mount (11) which can be rotated about the central axis of the supply reel (12).

8. A device as claimed in Claim 7, characterized in that the optical receiver (8) and, if necessary, an electrical pre-amplifier are secured to the take-up reel (6), while the other subassemblies necessary for processing the signal are fixedly arranged outside the the take-up reel (6) and can be detachably connected to the optical receiver (8) or the pre-amplifier.

**Revendications**

1. Procédé pour mesurer l'accroissement de l'atténuation (D) par unité de longueur d'un guide d'ondes lumineuses (1) se produisant dans le cas d'une courbure à rayon de courbure déterminé, caractérisé en ce que dans une extrémité (3) du guide d'ondes lumineuses (1) de la lumière est introduite à l'aide d'un émetteur stabilisé fixé à cette extrémité (3), l'autre extrémité (7) du guide d'ondes lumineuses (1) est fixée par rapport à un récepteur de lumière (8) relié de façon stationnaire à une bobine d'enroulement (6) provoquant l'accroissement de l'atténuation et déterminant les rayons de courbure et en ce que des mesures de l'atténuation sont effectuées dans le cas d'un petit nombre de spires du guide d'ondes lumineuses (1) enroulées sur la bobine d'enroulement (6) et au moins dans le cas d'un nombre essentiellement supérieur de spires.

2. Procédé selon la revendication 1, caractérisé en ce que la longueur du guide d'ondes lumineuses destinée à être enroulée sur la bobine d'enroulement (6) soit prélevée sur un réservoir dans lequel le guide d'ondes lumineuses est guidé de façon à éviter des courbures inférieures à 10 cm, de préférence inférieures à 30 cm.

3. Procédé selon la revendication 2, caractérisé en ce que la longueur du guide d'ondes lumineuses 1 destinée à l'enroulement est déroulée d'une bobine d'alimentation (2).

4. Procédé selon la revendication 3, caractérisé en ce que la longueur du guide d'ondes lumineuses 1 destinée à l'enroulement est déroulée d'une bobine d'alimentation rotative à laquelle est reliée de façon stationnaire l'émetteur.

5. Procédé selon la revendication 3, caractérisé en ce que le guide d'ondes lumineuses (1) est déroulé d'une bobine d'alimentation stationnaire (2) et en ce que la bobine d'enroulement (6) est guidée autour de la bobine d'alimentation (2) pendant sa rotation d'enroulement.

6. Procédé selon l'une des revendications 1 à 5, caractérisé en ce que le guide d'ondes lumineuses (1) est enroulé sur des domaines successives de la bobine d'enroulement (6) dont les diamètres sont différents.

7. Dispositif pour la mesure de l'accroissement de l'atténuation se produisant dans le cas d'une courbure à rayon de courbure déterminé par unité de longueur d'un guide d'ondes lumineuses conforme au procédé selon l'une des revendications 3 à 5, caractérisé en ce qu'il est prévu
   - une bobine d'alimentation (2) à partir de laquelle peut être déroulé le guide d'ondes lumineuses;
   - une bobine d'enroulement provoquant l'accroissement de l'atténuation et déterminant les rayons de courbure sur laquelle peut être enroulé le guide d'ondes lumineuses (6);
   - un émetteur stabilisé fixé à une extrémité (3) du guide d'ondes lumineuses (1) pour l'introduction de lumière dans le guide d'ondes lumineuses;
   - et un récepteur de lumière (8) fixé par rapport à l'autre extrémité (7) du guide d'ondes lumineuses (1) et relié de façon stationnaire à la bobine d'enroulement (6);
   - et que la bobine d'enroulement (6) peut tourner autour d'un axe de rotation (9) parallèle à l'axe central de la bobine d'alimentation (2), l'axe de rotation (9) de la bobine d'enroulement (6) étant disposé à un système de fixation périphérique (11) pouvant tourner autour de l'axe central de la bobine d'alimentation (12).

8. Dispositif selon la revendication 7, caractérisé en ce que le récepteur de lumière (8) et, le cas échéant, un préamplificateur électrique sont fixés sur la bobine d'enroulement (6), alors que les autres groupes de composants nécessaires pour le traitement de signaux sont disposés de façon stationnaire à l'extérieur de la bobine d'enroulement (6) et peuvent être reliés de façon détachable au récepteur de lumière (8) respectivement au préamplificateur.

Fig.1

Fig.2

Fig.3